# EUROPÄISCHE PATENTANMELDUNG

(11) **EP 1 947 427 A1**
(43) Veröffentlichungstag der Anmeldung: **23.07.2008**
(21) Anmeldenummer: 07100789.2
(22) Anmeldetag: 19.01.2007
(51) Int. Cl.: G01F 13/00, B65B 1/30, G01G 13/12

(54) **Verfahren zur Optimierung von Dosiervorgängen und Dosiervorrichtung**

(71) Anmelder: Mettler-Toledo AG, 8606 Greifensee (CH)
(72) Erfinder: Blöchlinger, Marc, 8707, Uetikon am See (CH); Lüchinger, Paul, 8610, Uster (CH); Künzi, Hansruedi, 8606, Greifensee (CH); Gluvakov, Siegfried, 8732, Neuhaus (CH); Nufer, Bruno, 8308, Illnau (CH); Emery, Jean-Christophe, 8005, Zürich (CH)

(57) **Zusammenfassung**

Im Verfahren zur Optimierung des Dosiervorganges einer Dosiervorrichtung wird durch die Steuer- und Regeleinheit vor einem ersten Dosiervorgang überprüft, ob im Speichermodul einer Dosiereinheit mindestens ein mit dem Dosiervorgang in Zusammenhang stehender Fliessparameter abgespeichert ist, sofern ein abgespeicherter Fliessparameter vorhanden ist, aus dem Speichermodul dieser Fliessparameter abgerufen, sofern kein abgespeicherter Fliessparameter vorhanden ist, ein Fliessparameter über eine Eingabeaufforderung vom Benutzer verlangt, ein Fliessparameter von einer zentralen Datenbank abgefragt oder mittels des ersten Dosiervorganges auf Basis einer Grundeinstellung des Dosierprogramms mindestens ein Fliessparameter ermittelt, mit dem mindestens einen Fliessparameter das Dosierprogramm direkt angepasst, mit dem angepassten Dosierprogramm mindestens ein Dosiervorgang durchgeführt und/oder der mindestens eine Fliessparameter im Speichermodul abgespeichert. Um das erfindungsgemässe Verfahren durchzuführen, muss eine Dosiervorrichtung vorhanden sein, welche eine Antriebsvorrichtung mit einer Steuer- und Regeleinheit zur Ausführung eines Dosierprogramms aufweist, in welche Antriebsvorrichtung eine Dosiereinheit einsetzbar, beziehungsweise entfernbar ist und die Dosiereinheit mindestens ein Speichermodul aufweist.

## Beschreibung

Die vorliegende Erfindung bezieht sich auf die Optimierung von Dosiervorgängen mit einer Dosiervorrichtung und auf eine Dosiervorrichtung für pulver- oder pastenförmiges Dosiergut.

Solche Dosiervorrichtungen finden insbesondere beim Dosieren kleiner Mengen, beispielsweise toxischer Substanzen, mit hoher Präzision in kleine Zielgefässe Verwendung. Häufig sind solche Zielgefässe auf einer Waage platziert, um die Menge der aus der Dosiervorrichtung ausgetragenen Substanz zu verwiegen, so dass sie anschliessend bestimmungsgemäss weiter verarbeitet werden kann.

Die zu dosierende Substanz befindet sich beispielsweise in einem Entnahmegefäss, welches einen Dosierkopf aufweist. Dabei ist es wünschenswert, die zu dosierende Substanz durch eine kleine Öffnung der Dosiervorrichtung auszutragen, so dass sie auch gezielt in ein Gefäss mit einem kleinen Öffnungsquerschnitt abgefüllt werden kann.

Dosiervorrichtungen für trockenes und/oder pulverförmiges Schüttgut sind bekannt und im Einsatz. So wird in der WO 2004/042334 A1 eine Vorrichtung zum Dosieren beschrieben, die aus einer Antriebsvorrichtung und einem in diese Antriebsvorrichtung einsetzbaren Dosierkopf besteht. Der Dosierkopf ist mit einem Entnahmegefäss verbunden und weist an seiner Unterseite einen verschliessbaren Auslass auf. In Betriebsstellung ist unterhalb des Dosierkopfs eine Waage angeordnet, auf deren Waagschale Zielgefässe gestellt werden können. Während des Dosiervorganges wird Dosiergut aus dem Entnahmegefäss ausgetragen und in das Zielgefäss eindosiert. Der während des Dosiervorganges kontinuierlich durch die Waage erfasste Gewichtszuwachs wird an eine Steuer- und Regeleinheit weitergeleitet, die den Dosiervorgang unterbricht, sobald die gewünschte Menge Dosiergut eindosiert, beziehungsweise das vom Benutzer definierte Zielgewicht im Zielgefäss erreicht worden ist.

Die erreichbare Präzision der Dosiervorrichtung beziehungsweise die erreichbaren Zielgewichte innerhalb eines Toleranzbandes sind begrenzt, denn bei solchen Dosierverfahren neigt die Dosiervorrichtung dazu, mehr Dosiergut auszutragen, als vorgegeben ist. Dies deshalb, weil beim Erreichen des Zielgewichtes weiteres Dosiergut bereits ausgetragen worden ist, welches sich beispielsweise im freien Fall zwischen der Dosiervorrichtung und den Zielgefäss befindet und das Wägeresultat der Waage erst beeinflusst, wenn das Dosiergut auf dem Grund des Zielgefässes oder auf dem bereits eindosierten Dosiergut aufliegt.

Die Toleranzbreite der Dosiervorrichtung, ausgedrückt in der Streuung der erreichbaren Zielgewichte, wird insbesondere durch die Reaktionszeit der Waage beeinflusst. Durch das relativ späte Eintreffen des Wägesignals in der Steuer- und Regeleinheit der Dosiervorrichtung, ist bereits zuviel Dosiergut ausdosiert worden. Bei vielen Dosiervorrichtungen, welche wie die in der WO 2004/042334 A1 offenbart, eine vom Beginn bis zum Ende des Dosiervorganges kontinuierliche Austragung von Dosiergut aufweisen, wird der Massenstrom oder der Volumenstrom des Dosiergutes durch ein in der Steuer- und Regeleinheit ausgeführtes Dosierprogramm gegen Ende des Dosiervorganges reduziert, um die Reaktionszeit der Waage beziehungsweise deren Waagenelektronik zu berücksichtigen. Dadurch verlängert sich aber der Dosiervorgang in Abhängigkeit der geforderten Präzision, so dass bei einer vorgegebenen engen Toleranzbreite des zu erreichenden Zielgewichts oder der Zielmenge der Dosiervorgang sehr lange andauern kann.

Das Dosierprogramm gibt vor, in welchem Masse über die Dosierzeit eine Austrittsöffnung am Dosierkopf geöffnet und geschlossen wird.

Anders als bei Flüssigkeiten, deren Fliessverhalten bei gegebenen Umweltbedingungen wie Druck und Temperatur annähernd konstant bleibt, wird das Fliessverhalten von Pulver- oder pastenförmigen Substanzen von erheblich mehr Einflussfaktoren bestimmt. Dasselbe Pulver kann alleine durch eine unterschiedliche Schüttdichte ein grundverschiedenes Fliessverhalten aufweisen; so verhält sich beispielsweise gepresstes Weizenmehl grundlegend anders als locker aufgeschichtetes Weizenmehl.

Das Fliessverhalten von Dosiergut kann sich auch auf Grund einer veränderten relativen Feuchtigkeit der Umgebung oder des Dosierguts selbst stark ändern.

Ebenso haben die Partikel- oder Korngrösse und die Korngrössenverteilung eines Dosierguts sowie die Form der einzelnen Partikel einen entscheidenden Einfluss auf das Fliessverhalten. All diese Einflussfaktoren machen es nahezu unmöglich, für die gesamte Palette von bekannten Pulvern bei gleich bleibender Toleranzbreite ein unveränderbares Dosierprogramm zu verwenden.

Der vorliegenden Erfindung liegt daher die Aufgabe zugrunde, ein Verfahren zur Optimierung eines Dosiervorganges anzugeben, welches eine hohe Präzision bezogen auf das angestrebte Zielgewicht bei vertretbarer Dauer eines Dosiervorganges ermöglicht, sowie eine Dosiervorrichtung zur Durchführung dieses optimierten Dosiervorganges zu schaffen.

Diese Aufgabe wird mit einem Verfahren und einer Dosiervorrichtung gelöst, welche die in den unabhängigen Patentansprüchen angegebenen Merkmale aufweisen.

Um das erfindungsgemässe Verfahren zur Optimierung eines Dosiervorganges durchzuführen, muss eine Dosiervorrichtung vorhanden sein, welche eine Antriebsvorrichtung mit einer Steuer- und Regeleinheit zur Ausführung eines Dosierprogramms aufweist, wobei die Antriebsvorrichtung zum Zwecke der Entnahme von Dosiergut mit mindestens einer Dosiereinheit zusammenwirkt und die Dosiereinheit mindestens ein Speichermodul aufweist.

Im Verfahren zur Optimierung des Dosiervorganges einer Dosiervorrichtung für pulver- oder pastenförmiges Dosiergut wird
- durch die Steuer- und Regeleinheit vor einem ersten Dosiervorgang überprüft, ob im Speichermodul und/oder in der Steuer- und Regeleinheit mindestens ein mit dem Dosiervorgang in Zusammenhang stehender Fliessparameter abgespeichert ist,
- sofern ein abgespeicherter Fliessparameter vorhanden ist, aus dem mindestens einen Speichermodul durch die Steuer- und Regeleinheit mindestens ein Fliessparameter abgerufen,
- sofern kein abgespeicherter Fliessparameter vorhanden ist, ein Fliessparameter über eine Eingabeaufforderung vom Benutzer verlangt, ein Fliessparameter von einer zentralen Datenbank abgefragt oder mittels des ersten Dosiervorganges auf Basis einer Grundeinstellung des Dosierprogramms mindestens ein Fliessparameter ermittelt,
- mit dem mindestens einen Fliessparameter das Dosierprogramm direkt angepasst,
- mit dem angepassten Dosierprogramm mindestens ein Dosiervorgang durchgeführt und/oder der mindestens eine Fliessparameter im Speichermodul abgespeichert.

Erst mit der Ermittlung eines Fliessparameters, welcher im Wesentlichen von den inneren geometrischen Verhältnissen des Dosierkopfs und den Eigenschaften des zu dosierenden Pulvers abhängt, kann das Dosierprogramm so angepasst werden, dass das Öffnen und Schliessen der Austrittsöffnung unter Berücksichtigung der Eigenschaften des Dosiergutes entsprechend erfolgen kann. Ein entscheidender Vorteil des erfindungsgemässen Verfahrens ist, dass der Fliessparameter für nachfolgende Dosierungen verfügbar bleibt und mit der mit Dosiergut verfüllten Dosiereinheit durch die Einspeicherung im Speichermodul verbunden bleibt. Die Dosiereinheit kann beispielsweise nach der Entnahme von Dosiergut in ein Lager zurückgestellt werden, bis eine weitere Entnahme von Dosiergut erforderlich ist. Bei dieser nachfolgenden Entnahme muss nicht zuerst der Fliessparameter mittels einer langsamen, zeitintensiven Dosierung ermittelt werden, er kann über die Steuer- und Regeleinheit direkt aus dem Speichermodul abgerufen werden.

Die Dosiereinheit weist im Wesentlichen einen Dosierkopf und mindestens ein Entnahmegefäss auf, die vorzugsweise über eine formschlüssige, kraftschlüssige oder stoffschlüssige Verbindung miteinander verbunden sind. Sowohl das Entnahmegefäss als auch der Dosierkopf kann mindestens ein Speichermodul aufweisen.

Der mindestens eine Fliessparameter wird im Wesentlichen aus dem während des Dosiervorganges aus einer an der Dosiereinheit beziehungsweise am Dosierkopf ausgebildeten Austrittsöffnung austretenden Volumenstrom oder Massenstrom und dem variierbaren Durchtrittsquerschnitt der Austrittsöffnung, ermittelt.

Der Fliessparameter ist somit eine Grösse, die im Wesentlichen angibt, welcher Massen- oder Volumenstrom bei welchem Öffnungsquerschnitt einer Austragungsöffnung des Dosierkopfs zu erwarten ist. Der Fliessparameter ermöglicht daher eine an das Dosiergut angepasste Vorausbestimmung, wann die Austrittsöffnung des Dosierkopfs verschlossen werden muss. Der Wägewert der Waage muss daher bei nachfolgenden Dosierungen nicht abgewartet werden um sich an das vorgegebene Zielgewicht heranzutasten. Der ermittelte Wägewert dient lediglich noch zur Überprüfung der Menge des ausdosierten Dosierguts und gegebenenfalls zur Anpassung des Fliessparameters beziehungsweise des Dosierprogramms, sofern sich die ausdosierte Menge Dosiergut der vorgegebenen oberen oder unteren Toleranzgrenze des Zielgewichtes annähert.

Der Fliessparameter ist nicht zwingend ein einzelner Wert, er kann selbstverständlich eine Funktion sein, aber auch eine Wertematrix.

Da der Dosierkopf und/oder das Entnahmegefäss ein Speichermodul aufweist, in welchem der Fliessparameter des im Entnahmegefäss vorhandenen Dosierguts abgespeichert werden kann, ist dieser Fliessparameter auch bei späteren Entnahmen von Dosiergut verfügbar und muss nicht zuerst ermittelt werden. Sofern er in einer zentralen Datenbank abgespeichert ist, kann er auch über die modernen Kommunikationsmittel wie beispielsweise das Internet aus dieser zentralen Datenbank abgerufen werden. Eine solche zentrale Datenbank kann beispielsweise durch Vorversuche ermittelte Fliessparameter enthalten, die dem Benutzer zur Verfügung gestellt werden.

Um den Benutzer bestmöglich zu unterstützen, kann im mindestens einen Speichermodul bereits werksseitig ein durch Vorversuche ermittelter Fliessparameter abgespeichert werden. Dieser durch Vorversuche ermittelte Fliessparameter kann mit einem Referenzpulver ermittelt worden sein, welches ähnliche Fliesseigenschaften aufweist wie das später in die Dosiereinheit verfüllte Dosiergut. Dies hat den Vorteil, dass für die Vorversuche keine hochgiftigen Substanzen verwendet werden müssen.

Selbstverständlich kann die Eingabe des mindestens einen Fliessparameters auch über eine Eingabeeinheit und/oder Ein-/Ausgabeeinheit erfolgen.

In einer ersten Ausführung der Erfindung wird bei einer Reihe von Entnahmen beziehungsweise Dosiervorgängen mindestens beim letzten Dosiervorgang mindestens ein aktualisierter Fliessparameter ermittelt und der mindestens eine aktualisierte Fliessparameter im Speichermodul und/oder in der Steuer- und Regeleinheit und/oder in der zentralen Datenbank als Zahlenwert oder Wertekombination oder Funktion gespeichert und/oder über eine Ein-/Ausgabeeinheit an den Benutzer ausgegeben.

In einer zweiten Ausführung der Erfindung wird nach jedem Dosiervorgang mindestens ein aktualisierter Fliessparameter ermittelt und der mindestens eine aktualisierte Fliessparameter im Speichermodul und/oder in der Steuer- und Regeleinheit und/oder in der zentralen Datenbank als Zahlenwert oder Wertekombination oder Funktion gespeichert und/oder über eine Ein-/Ausgabeeinheit an den Benutzer ausgegeben.

Selbstverständlich kann die Speicherung des aktualisierten Fliessparameters auch nur nach einer Bestätigung durch den Benutzer erfolgen. Wenn der Benutzer die Bestätigung verweigert, wird der aktualisierte Fliessparameter verworfen.

Nach dem Entfernen der Dosiereinheit aus der Antriebsvorrichtung muss der Dosierkopf nicht zwingend vom Entnahmegefäss getrennt werden. Je nach Dichtheit des Dosierkopfs kann dieser zugleich als Verschlussdeckel dienen und bildet zusammen mit dem Entnahmegefäss einen Aufbewahrungsbehälter für das darin enthaltene Dosiergut. Um die Bewirtschaftung der Aufbewahrungsbehälter zu erleichtern, kann mindestens ein Identifikationsmerkmal zur Identifikation des im Entnahmegefäss enthaltenen Dosierguts im Speichermodul und/oder in der Steuer- und Regeleinheit und/oder in der zentralen Datenbank abgespeichert werden.

Die Eingangs erwähnten Einflussfaktoren, welche das Fliessverhalten von pulver- oder pastenförmigem Dosiergut bestimmen, verhindern möglicherweise, dass verschiedenste Pulver oder Pasten mit demselben Dosierkopf oder Dosierkopf - Modell zufrieden stellend dosiert werden können. Daher können trotz gleicher mechanischer Verbindungsstellen mit der Antriebsvorrichtung, die im Dosierkopf angeordneten mechanischen Komponenten verschieden ausgestaltet sein. Da das Fliessverhalten des Dosiergutes auch von diesen Komponenten beeinflusst wird, ist es vorteilhaft, wenn mindestens ein Ausführungsmerkmal der technischen Ausprägung des Dosierkopfs im Speichermodul und/oder in der Steuer- und Regeleinheit und/oder in der zentralen Datenbank abgespeichert wird.

Da sich das Dosiergut während der Lagerzeit oder bei Dosiergut mit raschem Zerfallsprozess während mehrerer, aufeinander folgender Dosiervorgänge verändern kann, ist es von Vorteil, wenn mindestens ein Eigenschaftsmerkmal, insbesondere das Verfalldatum des Dosierguts, im Speichermodul und/oder in der Steuer- und Regeleinheit und/oder in der zentralen Datenbank abgespeichert wird. Weitere Eigenschaftsmerkmale des Dosierguts können die Partikel- oder Korngrösse, die Form der Partikel, die elektrostatischen Eigenschaften, die chemischen Eigenschaften und dergleichen mehr sein.

Ebenso vorteilhaft ist, wenn mindestens ein Umweltmerkmal, insbesondere die Feuchtigkeit, und/oder die Temperatur und/oder der Umgebungsdruck durch mindestens einen Sensor ermittelt wird und im Speichermodul und/oder in der Steuer- und Regeleinheit und/oder in der zentralen Datenbank abgespeichert wird.

Die Oberflächen der mechanischen Komponenten des Dosierkopfs können während des Dosiervorganges zum Beispiel durch die Einwirkung von hartem, scharfkantigem Dosiergut aufgeraut werden. Solche aufgerauten Oberflächen können das Fliessverhalten beeinflussen oder bei fortgesetztem Dosieren sogar zur Kontamination des Dosiergutes führen, wenn kleine Partikel aus der aufgerauten Oberfläche herausgelöst werden. Idealerweise wird deshalb mindestens ein Zustandsmerkmal des Dosierkopfs, insbesondere das dosierte Gesamtvolumen und/oder die Anzahl Dosierungen im Speichermodul und/oder in der Steuer- und Regeleinheit und/oder in der zentralen Datenbank abgespeichert.

Vorzugsweise wird betreffend ihrer Ermittlung und/oder Speicherung zumindest ein Fliessparameter, und/oder ein aktualisierter Fliessparameter, und/oder ein Eigenschaftsmerkmal und/oder ein Zustandsmerkmal und/oder oder ein Umweltmerkmal mit mindestes einer Zeitinformation abgespeichert. Die Abspeicherung mit mindestens einer Zeitinformation lässt eine ganze Reihe von Überwachungs- und Auswertungsmöglichkeiten zu. Als Zeitinformation können beispielsweise das Datum und die Zeit der Dosierung oder das Datum und die Zeit der Ermittlung eines Eigenschafts- Zustands- oder Umweltmerkmals abgespeichert werden.

Beispielsweise lässt sich bei einer Speicherung mehrerer Fliessparameter in chronologischer Reihenfolge dessen Veränderung feststellen. Diese Veränderung kann Aufschluss über den Zustand des Dosierkopfs und/oder des Dosierguts geben. Ein Ausführungsbeispiel einer entsprechenden Analyse ist weiter unten beschrieben.

Sofern aus Vorversuchen bekannt ist, wie sich über die Betriebszeit des Dosierkopfs oder über die Lagerzeit des Dosierguts in der Dosiereinheit der Fliessparameter ändert, muss nicht zwingend ein aktualisierter Fliessparameter ermittelt werden. Es können beispielsweise aus den Vorversuchen ermittelte Korrekturwerte zur Anpassung des Fliessparameters herangezogen werden.

Somit kann
- die Zeitinformation des mindestens einen Fliessparameters mit der Zeitinformation des zuletzt ermittelten Eigenschaftsmerkmals und/oder des mindestens einen Zustandsmerkmals und/oder des mindestens einen Umweltmerkmals in der Steuer- und Regeleinheit oder in einer separaten Recheneinheit verglichen werden,
- sofern die Zeitinformation des Fliessparameters älter ist als die Zeitinformation des zuletzt ermittelten Eigenschaftsmerkmals und/oder des mindestens einen Zustandsmerkmals und/oder des mindestens einen Umweltmerkmals entsprechende, in Vorversuchen ermittelte Korrekturwerte, welche im Speichermodul und/oder in der Steuer- und Regeleinheit und/oder in der zentralen Datenbank abgespeichert sind, abgerufen werden, und ausgehend vom mindestens einen Fliessparameter mittels eines in der Steuer- und Regeleinheit oder in einer separaten Recheneinheit ausführbaren Korrekturprogramms unter Berücksichtigung der Korrekturwerte ein aktualisierter Fliessparameter ermittelt und der aktualisierte Fliessparameter mit der Zeitinformation des zuletzt ermittelten Eigenschaftsmerkmals, Zustandsmerkmals oder Umweltmerkmals versehen werden, oder
- sofern die Zeitinformation des Fliessparameters jünger ist als die Zeitinformation des zuletzt ermittelten Eigenschaftsmerkmals und/oder des mindestens einen Zustandsmerkmals und/oder des mindestens einen Umweltmerkmals, mindestens ein Eigenschaftsmerkmal und/oder ein Zustandsmerkmal und/oder ein Umweltmerkmal ermittelt werden.

Ferner kann die Dosiereinheit, insbesondere der Dosierkopf und/oder das Dosiergut dadurch überwacht werden, dass der mindestens eine Fliessparameter und/oder der mindestens eine, aktualisierte Fliessparameter und/oder mindestens ein Eigenschaftsmerkmal und/oder mindestens ein Zustandsmerkmal und/oder mindestens ein Umweltmerkmal in der Steuer- und Regeleinheit oder in einer separaten Recheneinheit mit wenigstens einem Schwellwert verglichen wird und nach Überschreiten dieses Schwellwerts
- eine entsprechende Belastung registriert;
- eine entsprechende Belastung registriert und die Summe aller Belastungen berechnet oder
- eine entsprechende Belastung registriert und die Summe aller Belastungen berechnet und durch Vergleich mit einem Maximalwert der zulässigen Belastungen eine zulässige Restbelastung oder Restlebensdauer des Dosierkopfs und/oder des Dosiergutes berechnet wird.

Als Belastungen gelten alle Veränderungen, die sich nachhaltig auf den Dosiervorgang auswirken. Beispielsweise kann über die Einsatzdauer des Dosierkopfs dessen mit dem Dosiergut in Kontakt stehende Flächen durch das Dosiergut aufgeraut werden und sich dadurch das Fliessverhalten verändern.

Als Belastungen gelten aber auch Einwirkungen, die das Dosiergut nachhaltig verändern. So können aufgeraute Flächen des Dosierkopfs dazu führen, dass sich einzelne Partikel daran festsetzen und durch andere, bewegte Partikel zermahlen werden. Selbstverständlich kann eine Veränderung der Feuchtigkeit oder Temperatur in der Umgebung auch beim Dosiergut eine Veränderung bewirken.

Das Überschreiten des Schwellwertes und/oder das Überschreiten des Maximalwertes kann verschiedene Aktionen auslösen. So kann die Steuer- und Regeleinheit oder die Recheneinheit eine Alarmierung auslösen und/oder den Dosiervorgang unterbrechen und/oder eine Bereitschaftsanzeige löschen.

Selbstverständlich können die gemessenen Belastungen, bevorzugt als Funktion der Zeit beziehungsweise mit einer Zeitinformation versehen, auch im Speichermodul und/oder in der Steuer- und Regeleinheit und/oder in der zentralen Datenbank abgespeichert werden, auch dann, wenn keine Schwellwert oder Maximalwert überschritten worden ist. Dies eröffnet viele neue Möglichkeiten den Zustand der einzelnen Proben zu dokumentieren und gegebenenfalls weitere Aktionen wie beispielsweise Nachbehandlungen des eindosierten Dosiergutes anhand dieser Daten abzustimmen. Auch für die Fehlersuche bei missratenen Experimenten können diese Daten einen wichtigen Beitrag leisten.

Die in der Speichereinheit des Dosierkopfs eingespeicherten Daten können über eine Lese-/Schreibvorrichtung der Dosiervorrichtung nach Wunsch des Benutzers vielfältig verwendet werden. Sofern ein Zielgefäss eine Zielgefäss-Speichereinheit aufweist, kann in diese Zielgefäss-Speichereinheit automatisch oder nach einer Eingabebestätigung durch den Benutzer mindestens ein Identifikationsmerkmal und/oder mindestens ein Eigenschaftsmerkmal des in das Zielgefäss zu dosierenden oder dosierten Dosierguts eingespeichert werden. Damit ist das im Zielgefäss eindosierte Dosiergut eindeutig identifizierbar. Als zusätzliches Eigenschaftsmerkmal kann hier auch die eindosierte Menge abgespeichert werden. Dies erleichtert insbesondere die Verfolgbarkeit und Überwachung von unter strengen gesetzlichen Vorschriften stehender Substanzen.

Zur Durchführung des Verfahrens ist eine geeignete Dosiervorrichtung notwendig. Idealerweise weist die Dosiervorrichtung eine Antriebsvorrichtung mit einer Steuer- und Regeleinheit zur Ausführung eines Dosierprogramms auf. Die Antriebsvorrichtung kann mit mindestens einer Dosiereinheit zum Zwecke der Entnahme von Dosiergut in Wirkverbindung gebracht werden. Die Dosiereinheit weist mindestens ein Speichermodul auf, wobei durch die Steuer- und Regeleinheit mindestens ein Fliessparameter aus dem Speichermodul abrufbar und/oder ein Fliessparameter im Speichermodul und/oder in einer Datenbank und/oder in der Steuer- und Regeleinheit speicherbar ist.

Die Dosiereinheit kann freistehend aufgestellt werden oder beispielsweise in einen Halter eingesetzt, beziehungsweise aus diesem Halter nach dem Dosiervorgang wieder entfernt werden. Die Antriebsvorrichtung muss derart gegenüber der Dosiereinheit beziehungsweise gegenüber dem Halter ausgerichtet werden, dass die Antriebsvorrichtung mit der Dosiereinheit zusammenwirken kann. Vorzugsweise weist aber die Antriebsvorrichtung selbst Mittel zur Aufnahme mindestens einer Dosiereinheit auf. Diese Mittel können beispielsweise ein erstes und ein zweites Gegenstück sein, welche zu speziellen Ausformungen an der Dosiereinheit, beispielsweise einem ersten und einem zweiten Formelement passen. Dadurch ist die Antriebsvorrichtung formschlüssig mit der Dosiereinheit verbunden und es können sich während des Betriebes der Dosiervorrichtung keine Verschiebungen zwischen der Antriebsvorrichtung und der Dosiereinheit ergeben.

Die Dosiereinheit weist im Wesentlichen ein Entnahmegefäss und einen Dosierkopf auf, welche form- kraft- oder stoffschlüssig miteinander verbunden sind.

Im Speichemodul und/oder in der Steuer- und Regeleinheit und/oder in einer zentralen Datenbank sind mindestens ein Eigenschaftsmerkmal des Dosierguts und/oder mindestens ein Zustandsmerkmal der Dosiereinheit und/oder mindestens ein Umweltmerkmal speicherbar und aus dem Speichermodul abrufbar.

Das Speichermodul kann über mindestens eine galvanische Verbindung und/oder über mindestens eine kabellose Verbindung mit der Steuer- und Regeleinheit verbunden sein.

Vorzugsweise weist ein durch die Dosiervorrichtung zu befüllendes Zielgefäss eine Zielgefäss-Speichereinheit auf. In diese Zielgefäss-Speichereinheit ist durch die Steuer- und Regeleinheit automatisch oder nach einer Eingabebestätigung und/oder einer Eingabe durch den Benutzer über eine Eingabeeinheit, mindestens ein im Speichemodul und/oder in der Steuer- und Regeleinheit und/oder in einer zentralen Datenbank gespeichertes Identifikationsmerkmal und/oder mindestens ein Eigenschaftsmerkmal des in das Zielgefäss zu dosierenden oder dosierten Dosierguts speicherbar und die Zielgefäss-Speichereinheit durch mindestens eine Lese-/Schreibvorrichtung auslesbar.

Der mindestens eine Fliessparameter oder aktualisierte Fliessparameter ist im Wesentlichen das Verhältnis des während des Dosiervorganges aus einer an der Dosiereinheit beziehungsweise am Dosierkopf ausgebildeten Austrittsöffnung austretenden Volumenstroms oder Massenstroms des Dosiergutes, zu einem variierbaren Durchtrittsquerschnitt der Austrittsöffnung.

Einzelheiten des erfindungsgemässen Verfahrens und der erfindungsgemässen Dosiervorrichtung ergeben sich anhand der Beschreibung der in den Zeichnungen dargestellten Ausführungsbeispiele. Es zeigen:
- Figur 1: eine erfindungsgemässe Dosiervorrichtung mit einer Antriebsvorrichtung und zwei mit Dosierköpfen versehenen Entnahmegefässen verschiedener Länge, wobei die Dosierköpfe von der Antriebsvorrichtung getrennt dargestellt sind;
- Figur 2: die Dosiervorrichtung aus Figur 1, mit einer in die Antriebsvorrichtung einsetzten Dosiereinheit, sowie eine Beschickungsvorrichtung und ein Mehrfachhalter, in welchem eine zweite Dosiereinheit stehend gelagert ist;
- Figur 3: die Dosiereinheit im Teilschnitt sowie die mögliche Anordnung einer Speichereinheit im Dosierkopf und einer Speichereinheit am Entnahmegefäss;
- Figur 4: den Signalverlauf als Funktion der Zeit eines an der Dosiervorrichtung angeordneten Feuchtesensors, wobei in 4a der Signalverlauf, in 4b die aufsummierten Belastungen und in 4c die durch den Signalverlauf generierten Ausgabesignale beziehungsweise Ausgabemeldungen dargestellt sind.

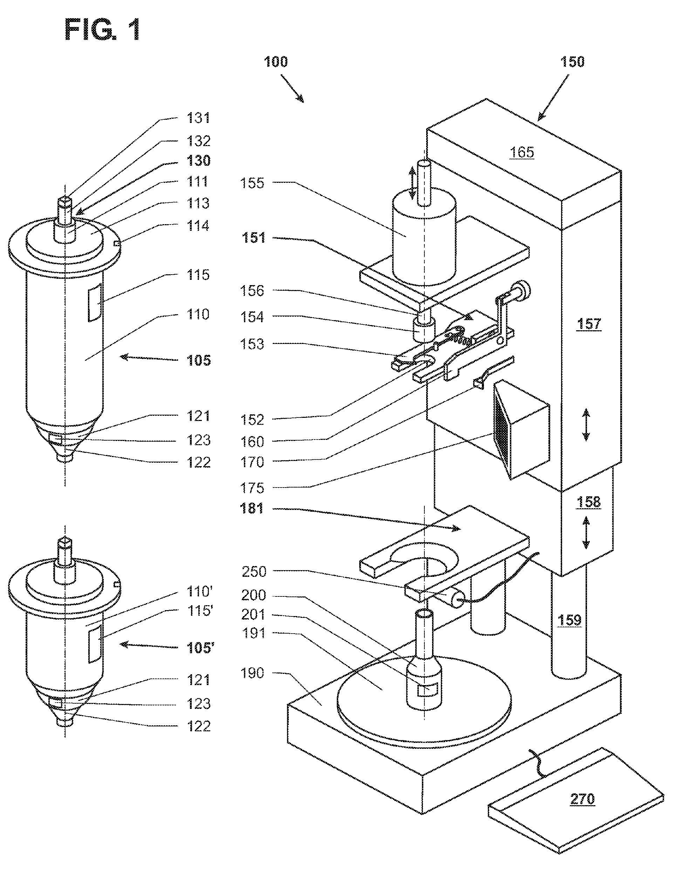

Die Figur 1 zeigt eine Dosiervorrichtung 100, die eine Antriebsvorrichtung 150 aufweist, in welche eine Dosiereinheit 105, 105' eingesetzt und aus dieser Antriebsvorrichtung 150 wieder entfernt werden kann. Die Dosiereinheit 105, 105' weist einen Dosierkopf 122 und ein Entnahmegefäss 110, 110' auf. Die Antriebsvorrichtung 150 weist ein Oberteil 157 und ein Unterteil 158 auf, die in Betriebsstellung der Dosiervorrichtung 100 im Wesentlichen senkrecht linear von- und gegeneinander verschiebbar sind. Dies ermöglicht die Verwendung von Entnahmegefässen 110, 110' unterschiedlicher Länge. Um einen einfachen Wechsel der Dosiereinheit 105, 105' und einen sicheren und genauen Dosierbetrieb zu gewährleisten, muss die Dosiereinheit 105 105' beziehungsweise die Antriebsvorrichtung 150 geeignete mechanische, gegebenenfalls mechanische und elektrische Verbindungselemente aufweisen, welche miteinander formschlüssig korrespondieren. Die Dosiereinheit 105, 105' weist mindestens ein erstes Formelement 111 auf, welches durch ein am Oberteil 157 ausgebildetes oder mit diesem verbundenes erstes Gegenstück 151 in einer in Betriebsstellung der Dosiervorrichtung 100 horizontalen Ebene positioniert wird. Ferner weist die Dosiereinheit 105, 105' mindestens ein zweites Formelement 121 auf, welches durch ein am Unterteil 158 ausgebildetes oder mit diesem verbundenes zweites Gegenstück 181 in Bezug auf die Antriebsvorrichtung 150 räumlich positioniert wird. Dadurch wird die Dosiereinheit 105, 105', beziehungsweise deren Austrittsöffnung für das Dosiergut in Bezug auf ein Zielgefäss 200 genau ausgerichtet. Am zweiten Gegenstück 181 ist ein Feuchtesensor 250 angeordnet, welcher die Feuchtigkeit in der unmittelbaren Umgebung der Einfüllöffnung des Zielgefässes 200 kontinuierlich erfassen kann. Die Dosiervorrichtung 100 ist mit einer Ein-/Ausgabeeinheit 270 verbunden, über welche beispielsweise das Zielgewicht und die erwünschte Zielgewichttoleranz eingegeben werden kann und über welche angezeigt wird, wann der Dosiervorgang abgeschlossen ist. Ferner können über die Ein-/Ausgabeeinheit 270 verschiedenste Informationen abgerufen oder eingegeben werden. Des Weiteren kann eine Steuer- und Regeleinrichtung 165 der Dosiervorrichtung 100 verschiedene Meldungen und Warnungen generieren und über die Ein-/Ausgabeeinheit 270 an den Benutzer weitergeben.

Das Entnahmegefäss 110 in Figur 1 weist eine zylindrische Grundform auf. Grundsätzlich sind aber auch andere Entnahmegefäss- Formen mit beispielsweise quadratischem, sechs- oder achteckigem Aussen- und Innenquerschnitt möglich. Der in die Antriebsvorrichtung 150 eingesetzte Dosierkopf 122 mit dem Entnahmegefäss 110, 110', weist in Betriebsstellung mit seiner Längsachse in senkrechter Richtung, wobei der Dosierkopf 122 am unteren Ende des Entnahmegefässes 110, 110' angeordnet ist. Im Dosierkopf 122 ist ein nicht dargestellter, drehantreibbarer Verschlusskörper integriert, welcher mit einer im Entnahmegefäss 110 bewegbar gelagerten Verschlusswelle 132 verbunden ist. Der Körper des Entnahmegefässes 110 ist rohrförmig ausgebildet und wird an der Oberseite durch einen Deckel 113 abgeschlossen. Im Deckel 113 befindet sich eine Durchtrittsstelle 130, in welcher das dem Verschlusskörper entgegen gesetzte Ende der Verschlusswelle 132 drehbar gelagert ist und mit diesem Ende aus dem Entnahmegefäss 110 ragt. Dieses Ende der Verschlusswelle 132 weist ein Kupplungsteil 131 auf, welches in diesem Ausführungsbeispiel als Vierkantstück ausgebildet ist und zumindest während des Dosiervorganges über eine Kupplungshülse 154 mit dem in der Antriebsvorrichtung 150 integrierten Antrieb 155 verbunden ist. Zum Zwecke des Koppelns sollte der Antrieb 155 oder zumindest eine mit dem Antrieb verbundene Antriebswelle 156 in Betriebsstellung vorzugsweise senkrecht linear verschiebbar sein. Selbstverständlich können an Stelle dieses Vierkantstücks alle bekannten form- oder kraftschlüssig wirkenden Kupplungen verwendet werden, deren Kupplungshälften auf einfache Weise trennbar sind.

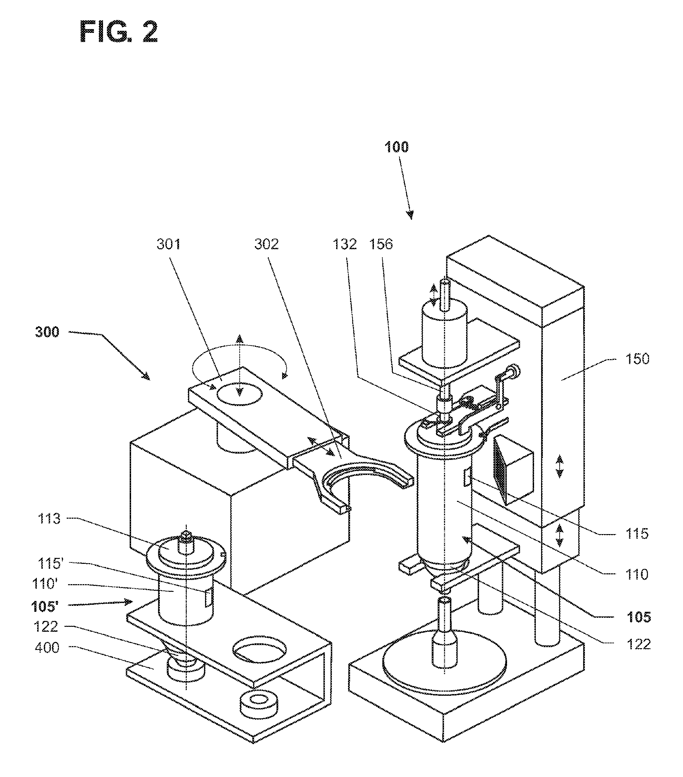

Damit das erste Formelement 111 nicht aus dem ersten Gegenstück 151 schlüpft, presst eine federbeaufschlagte Rückhalteklinke 153 wie in Figur 2 dargestellt, das Formelement 111 bei eingesetzter Dosiereinheit 105, 105' gegen ein Schlitzende 152. Zum Entfernen der Dosiereinheit 105, 105' aus der Antriebsvorrichtung 150 kann die Rückhalteklinke 153 elektromechanisch oder pneumatisch geöffnet werden. Wie in Figur 1 und Figur 2 dargestellt, kann durch eine entsprechende Gestaltung der Klinkennase die Rückhalteklinke 153 mit erheblichem Kraftaufwand beim Entfernen der Dosiereinheit 105, 105' durch das Formelement 111 beiseite geschoben werden. Die federbeaufschlagte Rückhalteklinke 153 und/oder das Schlitzende 152 kann zusätzlich elektrische Kontakte aufweisen, welche bei eingesetzter Dosiereinheit 105, 105', am ersten Formelement 111 oder am Entnahmegefäss 110 angeordnete Gegenkontakte berühren und dadurch eine elektrische Verbindung zwischen der Dosiereinheit 105, 105' und der Antriebsvorrichtung 150 herstellen. Eine solche elektrische Verbindung kann zu Erdungszwecken der Dosiereinheit 105, 105', oder wie nachstehend beschrieben, auch zur Verbindung mit einem in oder an der Dosiereinheit 105, 105' angeordneten Speichermodul 115, 115' 123 verwendet werden. In diesem Speichermodul 115, 115' 123 kann zusätzlich zum Fliessparameter auch die Länge des Entnahmegefässes 110, 110' abgespeichert werden, so dass sich die Antriebsvorrichtung 150 automatisch den unterschiedlichen Längen der Entnahmegefässe 110, 110' anpassen kann.

Die Antriebsvorrichtung 150 weist ferner eine Verriegelungsvorrichtung 160 auf, welche wie in Figur 2 dargestellt, bei eingesetzter Dosiereinheit 105, 105' auf den Deckel 113 einwirkt und die Dosiereinheit 105, 105' gegen eine Verschiebung in senkrechter Richtung sichert. Auch die Verriegelungsvorrichtung 160 kann, wie bereits bei der Rückhalteklinke 153 beschrieben, zusätzliche Kontakte und elektrische Verbindungsleitungen zum Speichermodul 115, 115',123 aufweisen und mechanisch, elektromechanisch oder pneumatisch betätigt werden.

Des Weiteren ist am Deckel 113 eine Aussparung 114 ausgebildet. In diese Aussparung 114 greift bei eingesetzter Dosiereinheit 105, 105' eine Verdrehsicherung 170 ein, um das vom Antrieb 155 auf die Dosiereinheit 105, 105' einwirkende Drehmoment aufzunehmen und abzustützen. Die Verdrehsicherung 170 ist in diesem Ausführungsbeispiel als einfache Federzunge ausgebildet, so dass beim Einsetzen der Dosiereinheit 105, 105' die Position der Aussparung 114 bezüglich der Verdrehsicherung 170 nicht beachtet werden muss. Sobald der Antrieb 155 über eine Antriebswelle 156 mit der Verschlusswelle 132 gekoppelt ist und ein Drehmoment auf die Verschlusswelle 132 einwirkt, wird die Dosiereinheit 105, 105' solange mitgedreht, bis die Verdrehsicherung 170 einrastet. Selbstverständlich kann die Dosiereinheit 105, 105' auch von Hand in die richtige Position gedreht werden. Als Verdrehsicherung 170 sind nicht nur Federzungen, sonder auch Bolzen, Stifte, Klemmpratzen und dergleichen verwendbar. Auch die Verdrehsicherung 170 kann, wie bereits bei der Rückhalteklinke 153 beschrieben, zusätzlich eine elektrische Verbindung zum Speichermodul 115, 115', 123 aufweisen. Zudem wirkt die dargestellte Verdrehsicherung 170 gleichzeitig als Überlastsicherung für den Antrieb, falls die Verschlusswelle 132 n der Dosiereinheit 105, 105' blockiert. Selbstverständlich kann die Aussparung 114 an einer beliebigen Stelle der Dosiereinheit 105, 105' ausgebildet und die Verdrehsicherung 170 an einer entsprechend dazu passenden Position an der Antriebsvorrichtung 150 angeordnet sein.

Das Speichermodul 115, 115', 123, muss aber nicht zwingend über elektrische Verbindungen, beispielsweise ein Signalkabel, ein Bussystem und dergleichen mit der Steuer- und Regeleinheit 165 der Dosiervorrichtung 100 verbunden sein. Auch kabellose Verbindungen, beispielsweise über eine induktiv oder mit Funkwellen arbeitende Lese-/Schreibvorrichtung 175 sind möglich. Insbesondere bietet sich hier die RFID- Technologie an.

Um zur Steuerung und Regelung des Dosiervorgangs entsprechende Steuer- und Regelgrössen zu erfassen, ist die Antriebsvorrichtung 150 mechanisch über höhenverstellbare Füsse 159 und elektrisch über eine nicht dargestellte Verbindung vorzugsweise mit einer Kraftmessvorrichtung 190 verbunden, auf deren Lastaufnehmer 191 das Zielgefäss 200 aufgelegt wird. Selbstverständlich kann die Kraftmessvorrichtung 190 auch von der Antriebsvorrichtung 150 mechanisch getrennt angeordnet sein, um zu vermeiden, dass sich während des Dosiervorganges Vibrationen der Antriebsvorrichtung 150 auf die Kraftmessvorrichtung 190 übertragen und dadurch das Wägesignal und/oder die Reaktionszeit der Kraftmessvorrichtung 190 beeinträchtigen. Das Zielgefäss 200 kann ein Zielgefäss-Speichermodul 201 aufweisen, in welches Zielgefäss-Speichermodul 201 vorzugsweise über eine kabellose Verbindung, beispielsweise auch über die Lese-/Schreibvorrichtung 175, Eigenschaftsmerkmale des Dosiergutes wie die Korngrösse, das Verfalldatum oder der Fliessparameter eingespeichert werden können. Die Einstellbarkeit der Füsse 159 ermöglicht die Verwendung verschieden ausgestalteter Zielgefässe 200 mit unterschiedlichen Gefässhöhen.

Die Figur 2 zeigt die Dosiervorrichtung 100 aus Figur 1, eine Beschickungsvorrichtung 300 für Dosierköpfe 122 mit Entnahmegefässen 110, 110' und einen Mehrfachhalter 400. Der Mehrfachhalter 400 kann in die Beschickungsvorrichtung 300 integriert, oder auch wie in Figur 2 dargestellt, von dieser getrennt angeordnet sein. In die Antriebsvorrichtung 150 der Dosiervorrichtung 100 ist eine Dosiereinheit 105, 105' eingesetzt. Die Antriebswelle 156 ist mit der Verschlusswelle 132 gekoppelt. Zwecks Kopplung und zur Entkopplung muss die Antriebswelle 156 in Betriebsstellung in senkrechter Richtung verschiebbar sein. Der Dosierkopf 122 schliesst das Entnahmegefäss 110, 110' dicht ab und diese Dosiereinheit 105, 105' kann somit als Aufbewahrungsbehälter verwendet und im beigestellten Mehrfachhalter 400 gelagert werden.

Die schematisch dargestellte Beschickungsvorrichtung 300 weist in Betriebsstellung einen in horizontaler Ebene verschwenkbaren Beschickungsarm 301 auf. Zudem ist der Beschickungsarm 301 in senkrechter Richtung linear verschiebbar. Dessen gabelförmig ausgebildete Aufnahme 302 kann in Richtung der Längsachse des Beschickungsarms 301 ein und ausgefahren werden. Mit Hilfe dieses Beschickungsarms 301 und dessen Aufnahme 302, die am Deckel 113 angreift, kann eine Einheit aus Dosierkopf 122 und Entnahmegefäss 110, 110' automatisiert in die Antriebsvorrichtung 150 eingesetzt beziehungsweise daraus entfernt werden.

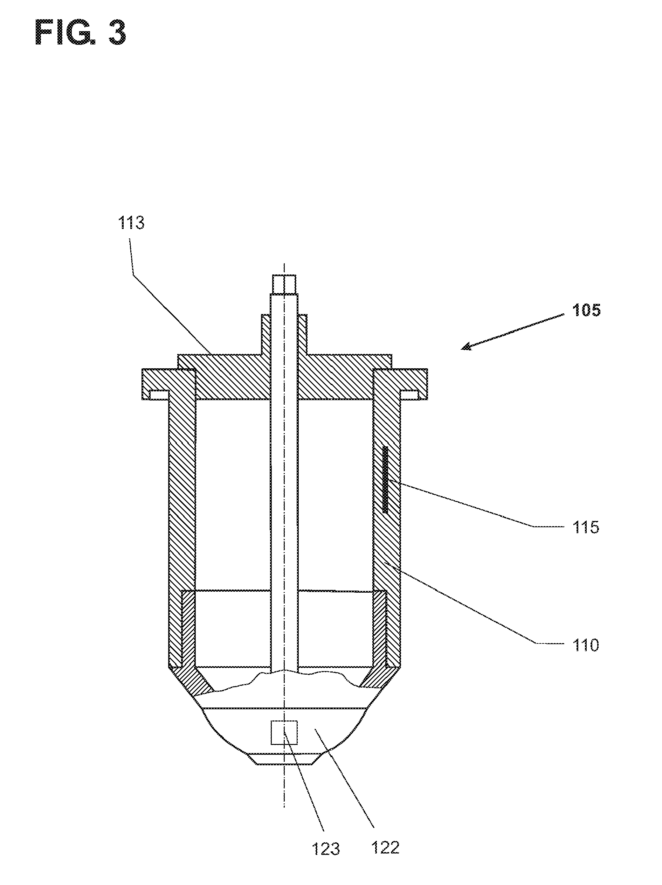

Die Figur 3 zeigt eine Dosiereinheit 105, 105' im Teilschnitt, welche einen Dosierkopf 122 und ein Entnahmegefäss 110 aufweist. Darin ist ersichtlich, dass der Dosierkopf 122 beispielsweise über eine Schraubverbindung mit dem Entnahmegefäss 110 verbunden ist. Das Entnahmegefäss 110 weist ein Speichermodul 115 und der Dosierkopf 122 ein Speichermodul 123 auf. Dadurch können Dosierkopf-spezifische Daten im Speichermodul 123 des Dosierkopfs 122 gespeichert sein, während im Speichermodul 115 des Entnahmegefässes 110 Dosiergut-spezifische Daten gespeichert sind. Nach der Montage des Dosierkopfs 122 mit dem Entnahmegefäss 110 und dem Einsetzen dieser Dosiereinheit 105, 105' in die Antriebsvorrichtung, können die Daten aus beiden Speichermodulen 115, 123 durch die Lese-Schreibvorrichtung ausgelesen und der Steuer- und Regeleinheit zugeführt werden. In einem Prozessor der Steuer- und Regeleinheit können diese Daten verarbeitet, und das Dosierprogramm angepasst werden.

Selbstverständlich sind auch alle Lösungen, in denen das Entnahmegefäss 110 und der Deckel 113 monolithisch miteinander verbunden sind, denkbar und somit Teil der Erfindung. Selbstverständlich kann pro Dosiereinheit 105 auch nur ein Speichermodul vorhanden sein.

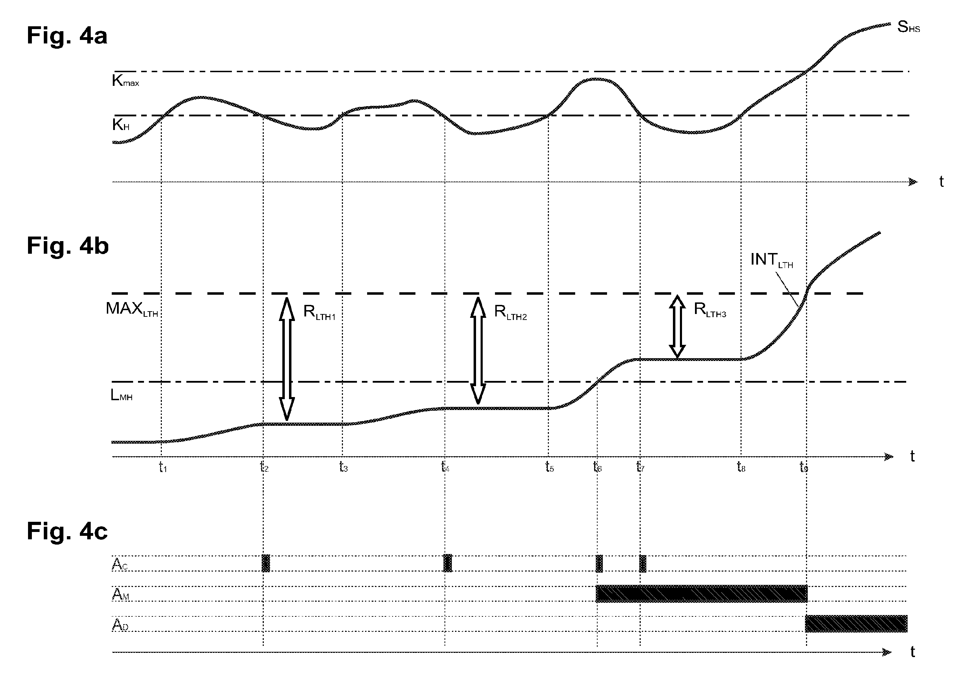

Wie bereits oben beschrieben, können verschiedene Belastungen wie die Betriebsdauer, die Temperatur, die Feuchtigkeit der Umgebung und dergleichen auf die Dosiereinheit und das Dosiergut einwirken, den Fliessparameter über die Zeit entscheidend verändern und dadurch einen Einfluss auf die Streuung der ausdosierten Mengen, bezogen auf die eingegebene Zielmenge, haben. In Figur 4 ist ein Beispiel stellvertretend für die verschiedenen möglichen Belastungen und deren mögliche Berücksichtigung im Dosierverfahren oder Betrieb der Dosiervorrichtung aufgezeigt. Als Beispiel ist in Figur 4 die Verlaufskurve der relativen Feuchtigkeit dargestellt, welche aus den kontinuierlich erfassten Sensorsignalen S_{HS} des aus Figur 1 bekannten Feuchtesensors 250 gebildet wurde. Ferner sind in Figur 4 auch die, beispielsweise durch den Prozessor der Steuer- und Regeleinheit generierten Ausgabesignale beziehungsweise Ausgabemeldungen A_{C}, AM, A_{D}, dargestellt.

In Figur 4a überschreitet der Sensorsignalverlauf in den Zeitpunkten t₁, t₃, t₅, t₈ einen Schwellwert K_{H}. Dieser stellt den Grenzwert dar, bei dessen Überschreitung der Feuchtigkeitsgehalt des Dosierguts so gross ist, dass infolge von sich zusammenklumpenden Dosierguts das Fliessverhalten des Dosierguts verändert wird. Die Grösse des Schwellwerts K_{H} hängt von den mechanischen Eigenschaften des Dosierguts ab und muss durch Vorversuche fallbezogen festgelegt werden. Als Schwellwerte können beispielsweise folgende Werte definiert sein:
Max./Min. Feuchtigkeitsgehalt
Max./Min. Temperaturgrenzen

Maximale Betriebsdauer (mechanische Einwirkungen des Dosierguts)

Sobald der Schwellwert K_{H} wie in den Zeitpunkten t₂, t₄, t₇ unterschritten wird, neigt das Dosiergut nicht mehr zum verklumpen, der Fliessparameter verändert sich in diesen Zeitabschnitten möglicherweise venachlässigbar gering.

Jedoch könnte durch die Veränderung des Feuchtigkeitsgehaltes in der Umgebung das Dosiergut bim hineinrieseln in das Zielgefäss austrocknen und dadurch können seine Eigenschaften, beispielsweise die Reaktionsfähigkeit verändert werden. Auch dies kann überwacht werden und, wie in Figur 4c dargestellt ist, kann bei der Unterschreitung des Schwellwertes K_{H} über eine Ausgabevorrichtung eine Warnung A_{C} ausgegeben werden.

Ferner kann auch ein Maximalwert Kₘₐₓ definiert werden, bei dessen Überschreitung beispielsweise der Fliessparameter sich derart verändert hat, dass eine Dosierung nicht mehr möglich ist oder sich die Eigenschaften des Dosierguts so stark verändert haben, dass es unbrauchbar wird. In diesem Falle könnte wie in der Figur 4c dargestellt, beispielsweise der Dosiervorgang ganz abgebrochen und über die in Figur 1 dargestellte Ein-/Ausgabeeinheit 270 vom Benutzer ein Wechsel A_{D} des Dosierkopfs oder der ganzen Dosiereinheit verlangt werden.

Auch die Veränderung des Fliessparameters kann überwacht und in vergleichbarer Weise ausgewertet werden.

Die Überschreitungen des Schwellwertes K_{H} und des Maximalwertes Kₘₐₓ in Abhängigkeit der Überschreitungszeit (t₂ - t₁; t₄ - t₃; t₇ - t₅;...) werden wie in Figur 4b dargestellt, als Belastungen INT_{LTH} registriert und aufsummiert. Die aufsummierten Belastungen INT_{LTH} werden mit dem durch Vorversuche ermittelten Lebensdauergrenzwert MAX_{LTH} verglichen und daraus die Restlebensdauer R_{LTH1}, R_{LTH2}, R_{LTH3} errechnet. Diese wird an die Ausgabeeinheit 270 übermittelt, im Speichermodul, in der Steuer- und Regeleinheit oder in einer nicht dargestellten, zentralen Datenbank gespeichert.

Wie in Figur 4b dargestellt, können noch weitere Grenzwerte definiert werden. Als Beispiel sei der Wartungsgrenzwert L_{MH} genannt, bei dessen Überschreitung ein Warnhinweis und/oder eine Wartungsaufforderung AM an die Ein-/Ausgabeeinheit 270 weitergeleitet wird (Figur 4c). Dies kann beispielsweise bedeuten, dass der Dosierkopf ausgewechselt werden muss. Des Weiteren kann bei der Überschreitung des Wartungsgrenzwertes L_{MH} im Zeitpunkt t₆ beispielsweise der Dosiervorgang unterbrochen, die Toleranzbreite des Zielgewichts heruntergestuft und/oder Messwertausdrucke können mit Warnhinweisen versehen werden. Diese Aufzählung soll nicht als abschliessend verstanden werden, da in diesem Zusammenhang noch viele weitere Aktionen und Ausprägungen der Ausgabe möglich sind.

Sobald die Belastungen INT_{LTH} den Lebensdauergrenzwert MAX_{LTH} überschreiten, kann wie in Figur 4c dargestellt, ein entsprechender Signalwert A_{D} an die Ein-/Ausgabeeinheit 270 übermittelt und beispielsweise der Dosiervorgang ganz abgebrochen und über die Ein-/Ausgabeeinheit 270 vom Benutzer ein Wechsel A_{D} des Dosierkopfs oder der ganzen Einheit aus Dosierkopf und Entnahmegefäss verlangt werden.

### Bezugszeichenliste

- 100: Dosiervorrichtung
- 105,105': Dosiereinheit
- 110',110: Entnahmegefäss
- 111: erstes Formelement
- 113: Deckel
- 114: Aussparung
- 115',115: Speichermodul
- 121: zweites Formelement
- 122: Dosierkopf
- 123: Speichermodul
- 130: Durchtrittsstelle
- 131: Kupplungsteil
- 132: Verschlusswelle
- 150: Antriebsvorrichtung
- 151: erstes Gegenstück
- 152: Schlitzende
- 153: Rückhalteklinke
- 154: Kupplungshülse
- 155: Antrieb
- 156: Antriebswelle
- 157: Oberteil
- 158: Unterteil
- 159: Fuss
- 160: Verriegelungsvorrichtung
- 165: Steuer- und Regeleinheit
- 170: Verdrehsicherung
- 175: Lese-/ Schreibvorrichtung
- 181: zweites Gegenstück
- 190: Kraftmessvorrichtung
- 191: Lastaufnehmer
- 200: Zielgefäss
- 201: Zielgefäss-Speichereinheit
- 250: Feuchtesensor
- 270: Ein-/Ausgabeeinheit
- 300: Beschickungsvorrichtung
- 301: Beschickungsarm
- 302: Aufnahme
- 400: Mehrfachhalter

## Patentansprüche

1. Verfahren zur Optimierung des Dosiervorganges einer Dosiervorrichtung (100) für pulver- oder pastenförmiges Dosiergut, welche Dosiervorrichtung (100) eine Antriebsvorrichtung (150) mit einer Steuer- und Regeleinheit (165) zur Ausführung eines Dosierprogramms aufweist und die Antriebsvorrichtung (150) zum Zwecke der Entnahme von Dosiergut mit mindestens einer Dosiereinheit (105, 105') zusammenwirkt, **dadurch gekennzeichnet, dass** die Dosiereinheit (105, 105') mindestens ein Speichermodul (115, 115', 123) aufweist, wobei
• durch die Steuer- und Regeleinheit (165) vor einem ersten Dosiervorgang überprüft wird, ob im Speichermodul (115, 115', 123) und/oder in der Steuer- und Regeleinheit (165) mindestens ein mit dem Dosiervorgang in Zusammenhang stehender Fliessparameter abgespeichert ist,
• sofern ein abgespeicherter Fliessparameter vorhanden ist, aus dem mindestens einen Speichermodul (115, 115', 123) durch die Steuer- und Regeleinheit (165) mindestens ein Fliessparameter abgerufen wird,
• sofern kein abgespeicherter Fliessparameter vorhanden ist, ein Fliessparameter über eine Eingabeaufforderung vom Benutzer verlangt wird, ein Fliessparameter von einer zentralen Datenbank abgefragt wird oder mittels des ersten Dosiervorganges auf Basis einer Grundeinstellung des Dosierprogramms mindestens ein Fliessparameter ermittelt wird,
• mit dem mindestens einen Fliessparameter das Dosierprogramm angepasst wird,
• mit dem angepassten Dosierprogramm mindestens ein Dosiervorgang durchgeführt wird und/oder der mindestens eine Fliessparameter im Speichermodul (115, 115', 123) abgespeichert wird.

2. Verfahren nach Anspruch 1, **dadurch gekennzeichnet, dass** der mindestens eine Fliessparameter aus dem während des Dosiervorganges aus einer an der Dosiereinheit (105, 105') ausgebildeten Austrittsöffnung austretenden Volumenstrom oder Massenstrom und aus einem Durchtrittsquerschnitt der variierbaren Austrittsöffnung, ermittelt wird.

3. Verfahren nach Anspruch 1 oder 2, **dadurch gekennzeichnet, dass** im mindestens einen Speichermodul (115, 115', 123) werksseitig ein durch Vorversuche ermittelter Fliessparameter abgespeichert wird.

4. Verfahren nach einem der Ansprüche 1 bis 3, **dadurch gekennzeichnet, dass** die Eingabe des mindestens einen Fliessparameters über eine Ein-/Ausgabeeinheit (270) erfolgt.

5. Verfahren nach einem der Ansprüche 1 bis 4, **dadurch gekennzeichnet, dass** beim letzten Dosiervorgang einer Reihe von Dosiervorgängen mindestens ein aktualisierter Fliessparameter ermittelt wird und der mindestens eine aktualisierte Fliessparameter im Speichermodul (115, 115', 123) und/oder in der Steuer- und Regeleinheit (165) und/oder in der zentralen Datenbank als Zahlenwert oder Wertekombination oder Funktion gespeichert und/oder über eine Ein-/Ausgabeeinheit (270) an den Benutzer ausgegeben wird.

6. Verfahren nach einem der Ansprüche 1 bis 4, **dadurch gekennzeichnet, dass** nach jedem Dosiervorgang mindestens ein aktualisierter Fliessparameter ermittelt wird und der mindestens eine aktualisierte Fliessparameter im Speichermodul (115, 115', 123) und/oder in der Steuer- und Regeleinheit (165) und/oder in der zentralen Datenbank als Zahlenwert oder Wertekombination oder Funktion gespeichert und/oder über eine Ein-/Ausgabeeinheit (270) an den Benutzer ausgegeben wird.

7. Verfahren nach Anspruch 5 oder 6, **dadurch gekennzeichnet, dass** die Speicherung nur nach einer Bestätigung durch den Benutzer erfolgt.

8. Verfahren nach einem der Ansprüche 1 bis 7, **dadurch gekennzeichnet, dass** mindestens ein Identifikationsmerkmal zur Identifikation des in der Dosiereinheit (105, 105') enthaltenen Dosierguts im Speichermodul (115, 115', 123) und/oder in der Steuer- und Regeleinheit (165) und/oder in der zentralen Datenbank abgespeichert wird.

9. Verfahren nach einem der Ansprüche 1 bis 8, **dadurch gekennzeichnet, dass** mindestens ein Ausführungsmerkmal der technischen Ausprägung des Dosierkopfs (122) im Speichermodul (115, 115', 123) und/oder in der Steuer- und Regeleinheit (165) und/oder in der zentralen Datenbank abgespeichert wird.

10. Verfahren nach einem der Ansprüche 1 bis 9, **dadurch gekennzeichnet, dass** mindestens ein Eigenschaftsmerkmal, insbesondere das Verfalldatum des Dosierguts, im Speichermodul (115, 115', 123) und/oder in der Steuer- und Regeleinheit (165) und/oder in der zentralen Datenbank abgespeichert wird.

11. Verfahren nach einem der Ansprüche 1 bis 10, **dadurch gekennzeichnet, dass** mindestens ein Umweltmerkmal, insbesondere die Feuchtigkeit, und/oder die Temperatur und/oder der Umgebungsdruck durch mindestens einen Sensor (250) ermittelt wird und im Speichermodul (115, 115', 123) und/oder in der Steuer- und Regeleinheit (165) und/oder in der zentralen Datenbank abgespeichert wird.

12. Verfahren nach einem der Ansprüche 1 bis 11, **dadurch gekennzeichnet, dass** mindestens ein Zustandsmerkmal des Dosierkopfs (122), insbesondere das dosierte Gesamtvolumen und/oder die Anzahl Dosierungen im Speichermodul (115, 115', 123) und/oder in der Steuer- und Regeleinheit (165) und/oder in der zentralen Datenbank abgespeichert wird.

13. Verfahren nach einem der Ansprüche 1 bis 12, **dadurch gekennzeichnet, dass** betreffend ihrer Ermittlung und/oder Speicherung zumindest ein Fliessparameter, und/oder ein aktualisierter Fliessparameter, und/oder ein Eigenschaftsmerkmal und/oder ein Zustandsmerkmal und/oder oder ein Umweltmerkmal mit mindestes einer Zeitinformation abgespeichert wird.

14. Verfahren nach Anspruch 13, **dadurch gekennzeichnet,**
• **dass** die Zeitinformation des mindestens einen Fliessparameters mit der Zeitinformation des zuletzt ermittelten Eigenschaftsmerkmals und/oder des mindestens einen Zustandsmerkmals und/oder des mindestens einen Umweltmerkmals in der Steuer- und Regeleinheit (165) oder in einer separaten Recheneinheit verglichen wird,
• sofern die Zeitinformation des Fliessparameters älter ist als die Zeitinformation des zuletzt ermittelten Eigenschaftsmerkmals und/oder des mindestens einen Zustandsmerkmals und/oder des mindestens einen Umweltmerkmals entsprechende, in Vorversuchen ermittelt Korrekturwerte, welche im Speichermodul (115, 115', 123) und/oder in der Steuer- und Regeleinheit (165) und/oder in der zentralen Datenbank abgespeichert sind, abgerufen werden und ausgehend vom mindestens einen Fliessparameter mittels eines in der Steuer- und Regeleinheit (165) oder in einer separaten Recheneinheit ausführbaren Korrekturprogramms unter Berücksichtigung der Korrekturwerte ein aktualisierter Fliessparameter ermittelt und der aktualisierte Fliessparameter mit der Zeitinformation des zuletzt ermittelten Eigenschaftsmerkmals, Zustandsmerkmals oder Umweltmerkmals versehen wird, oder
• sofern die Zeitinformation des Fliessparameters jünger ist als die Zeitinformation des zuletzt ermittelten Eigenschaftsmerkmals und/oder des mindestens einen Zustandsmerkmals und/oder des mindestens einen Umweltmerkmals, mindestens ein Eigenschaftsmerkmal und/oder ein Zustandsmerkmal und/oder ein Umweltmerkmal ermittelt wird.

15. Verfahren nach einem der Ansprüche 1 bis 14, **dadurch gekennzeichnet, dass** der mindestens eine Fliessparameter und/oder der mindestens eine, aktualisierte Fliessparameter und/oder mindestens ein Eigenschaftsmerkmal und/oder mindestens ein Zustandsmerkmal und/oder mindestens ein Umweltmerkmal in der Steuer- und Regeleinheit (165) oder in einer separaten Recheneinheit mit wenigstens einem Schwellwert (K_{H}) verglichen wird und nach Überschreiten dieses Schwellwerts (K_{H})
• eine entsprechende Belastung registriert;
• eine entsprechende Belastung registriert und die Summe aller Belastungen (INT_{LTH}) berechnet oder
• eine entsprechende Belastung registriert und die Summe aller Belastungen (INT_{LTH}) berechnet und durch Vergleich mit einem Maximalwert (MAX_{LTH}) der zulässigen Belastungen eine zulässige Restbelastung oder Restlebensdauer (R_{LTH}) des Dosierkopfs und/oder des Dosiergutes berechnet wird.

16. Verfahren nach Anspruch 15, **dadurch gekennzeichnet, dass** nach dem Überschreiten des Schwellwertes (K_{H}) und/oder nach dem Überschreiten des Maximalwertes (Kₘₐₓ) die Steuer- und Regeleinheit (165) oder die Recheneinheit eine Alarmierung auslöst und/oder den Dosiervorgang unterbricht und/oder eine Bereitschaftsanzeige löscht.

17. Verfahren nach einem der Ansprüche 1 bis 16, **dadurch gekennzeichnet, dass** ein durch die Dosiervorrichtung (100) zu befüllendes Zielgefäss (200) eine Zielgefäss-Speichereinheit (201) aufweist, in welche Zielgefäss-Speichereinheit (201) automatisch oder nach einer Eingabebestätigung durch den Benutzer mindestens ein Identifikationsmerkmal und/oder mindestens ein Eigenschaftsmerkmal des in das Zielgefäss (200) zu dosierenden oder dosierten Dosierguts eingespeichert wird.

18. Dosiervorrichtung (100) zur Durchführung des Verfahrens nach einem der vorangehenden Ansprüche, wobei die Dosiervorrichtung (100) eine Antriebsvorrichtung (150) mit einer Steuer- und Regeleinheit (165) zur Ausführung eines Dosierprogramms aufweist und welche Antriebsvorrichtung (150) mit mindestens einer Dosiereinheit (105, 105') zum Zwecke der Entnahme von Dosiergut in Wirkverbindung gebracht werden kann, **dadurch gekennzeichnet, dass** die Dosiereinheit (105, 105') mindestens ein Speichermodul (115, 115', 123) aufweist und durch die Steuer- und Regeleinheit (165) mindestens ein Fliessparameter aus dem Speichermodul (115, 115', 123) abrufbar und/oder ein Fliessparameter im Speichermodul (115, 115', 123) und/oder in einer Datenbank und/oder in der Steuer- und Regeleinheit (165) speicherbar ist.

19. Dosiervorrichtung (100) nach Anspruch 18, **dadurch gekennzeichnet, dass** die Antriebsvorrichtung (150) Mittel (151, 181) zur Aufnahme mindestens einer Dosiereinheit (105, 105') aufweist.

20. Dosiervorrichtung (100) nach Anspruch 18 oder 19, **dadurch gekennzeichnet, dass** im Speichermodul (115, 115', 123) und/oder in der Steuer- und Regeleinheit (165) und/oder in einer zentralen Datenbank mindestens ein Eigenschaftsmerkmal und/oder mindestens ein Zustandsmerkmal und/oder mindestens ein Umweltmerkmal speicherbar und abrufbar ist/sind.

21. Dosiervorrichtung (100) nach einem der Ansprüche 18 bis 20, **dadurch gekennzeichnet, dass** das Speichermodul (115, 115', 123) über mindestens eine galvanische Verbindung und/oder über mindestens eine kabellose Verbindung mit der Steuer- und Regeleinheit (165) verbunden ist.

22. Dosiervorrichtung (100) nach einem der Ansprüche 18 bis 21, **dadurch gekennzeichnet, dass** ein durch die Dosiervorrichtung (100) zu befüllendes Zielgefäss (200) eine Zielgefäss- Speichereinheit (201) aufweist, in welche Zielgefäss-Speichereinheit (201) automatisch oder nach einer Eingabebestätigung und/oder einer Eingabe durch den Benutzer mindestens ein im Speichermodul (115, 115', 123) und/oder in der Steuer- und Regeleinheit (165) und/oder in einer zentralen Datenbank gespeichertes Identifikationsmerkmal und/oder mindestens ein Eigenschaftsmerkmal des in das Zielgefäss (200) zu dosierenden oder dosierten Dosierguts speicherbar und die Zielgefäss-Speichereinheit (201) durch mindestens eine Lese-/Schreibvorrichtung (175) auslesbar ist.

23. Dosiervorrichtung (100) nach einem der Ansprüche 18 bis 22, **dadurch gekennzeichnet, dass** der mindestens eine Fliessparameter das Verhältnis des während des Dosiervorganges aus einer an der Dosiereinheit (105, 105') ausgebildeten Austrittsöffnung austretenden Volumenstroms oder Massenstroms des Dosiergutes, zu einem Durchtrittsquerschnitt der Austrittsöffnung ist.
